# EUROPEAN PATENT APPLICATION

(11) **EP 1 700 758 A1**
(43) Date of publication of application: **13.09.2006**
(21) Application number: 06002747.1
(22) Date of filing: 10.02.2006
(51) Int. Cl.: B60R 21/34

(54) **Airbag and airbag device for protecting a pedestrian or the like**

(30) Priority: 09.03.2005 JP 2005066017
(71) Applicant: TAKATA CORPORATION, Minato-ku, Tokyo 106-8510 (JP)
(72) Inventor: Nakamura, Atsushi, Tokyo 106-8510 (JP)
(74) Representative: Vossius & Partner

(57) **Abstract**

An airbag (10) for protecting a pedestrian or the like comprises a lower side portion (11) provided so as to extend along a cowl top (2), left and right side portions (12 and 13) provided so as to extend along left and right A pillars (6 and 6), respectively, and an upper side portion (14) connecting top portions of the left and right side portions (12 and 13). A horizontally central portion (14a) of the upper side portion (14) is connected to the left and right side portions (12 and 13) by small flow path cross-sectional portions (15). When the airbag (10) is inflated, introduction of gas to the upper side portion (14) from the left side portion (12) and the right side portion (13) is restricted, so that the internal pressures of the lower side portion (11), the left side portion (12), and the right side portion (13) become high early. Thereafter, the gas gradually flows to the upper side portion (14), so that the internal pressure of the entire airbag (10) is relatively low.

## Description

The present invention relates to an airbag for protecting a pedestrian or the like and an airbag device for protecting a pedestrian or the like including the airbag. The airbag prevents a pedestrian or a person riding, for example, a bicycle or a motorcycle (hereunder referred to as "pedestrian or the like") from directly bumping into, for example, a highly rigid portion, such as a pillar of a vehicle body, by being inflated along the outer surface of the vehicle body when a running vehicle collides with, for example, a pedestrian, a bicycle, or a motorcycle.

When a running vehicle collides with, for example, a pedestrian, a bicycle, or a motorcycle, the lower part of the body of the pedestrian or the like with which the vehicle has collided may be knocked away by the front portion of the vehicle, thrown up onto a hood covering the top surface of the front portion of the vehicle body, and undergo secondary collision with, for example, a highly rigid portion such as a pillar.

Fig. 10 in JP-A-2000-264146 (Patent Document 1) illustrates a protection device which protects a pedestrian or the like by preventing the pedestrian or the like from directly bumping into a portion near a cowl top, an A pillar, and the front edge of a roof as a result of inflating an airbag along the periphery of a windshield of a vehicle when the vehicle has collided with the pedestrian or the like.

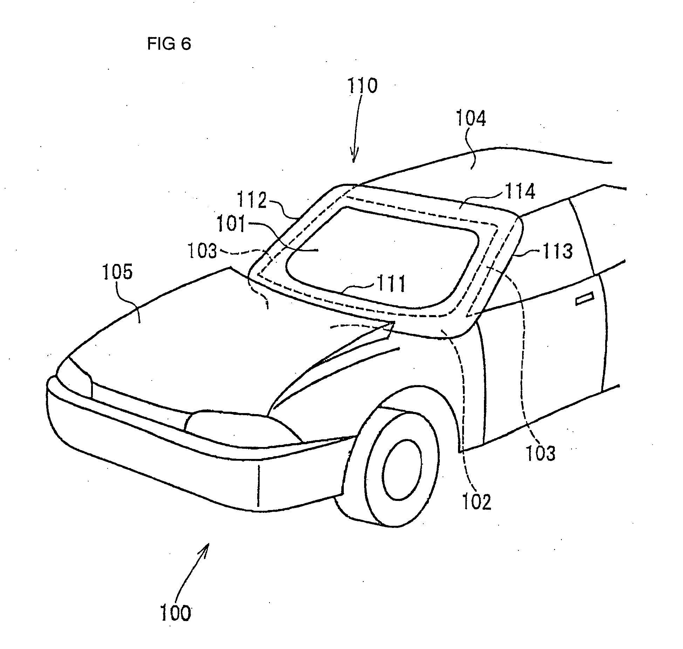

Fig. 6 is a perspective view of the protection device shown in Fig. 10 in the same document.

As shown in Fig. 6, the protection device shown in Fig. 10 in the same document includes an airbag 110 which is inflated in the form of a rectangular frame so as to surround the entire periphery of a windshield 101 of a vehicle 100.

The airbag 110 has a lower side portion 111 which is deployed horizontally along a cowl top 102, a left side portion 112 and a right side portion 113 which are deployed vertically along left and right A pillars 103 and 103, respectively, and an upper side portion 114 which is deployed horizontally along the front edge of a roof 104. A gas inlet (not shown) for introducing gas from an inflator (not shown) is provided near a horizontal longitudinal center of the lower side portion 111.

The airbag 110 is folded and disposed at the lower side (the back side) of the rear portion of a bonnet hood 105.

When the vehicle collides with a pedestrian or the like, the inflator ejects gas, so that deployment of the airbag 110 is started. Here, since the gas from the inflator is supplied to the lower side portion 111, first, the lower side portion 111 pushes up the bonnet hood 105 and is inflated towards the outer surface of the vehicle body, so that it is deployed in horizontal direction along the cowl top 102.

Next, from the lower side portion 111, the gas flows to the left side portion 112 and the right side portion 113, so that the left side portion 112 and the right side portion 113 are deployed so as to expand upward along the left and right A pillars 103, respectively. Since the top portion of the left side portion 1.12 and the top portion of the right side portion 113 are connected by the upper side portion 114, fluttering of the left side portion 112 and the right side portion 113 when they are deployed is prevented or restricted.

The deployment of the left side portion 112 and the right side portion 113 causes the upper side portion 114 to be placed along the front edge of the roof 104 as the upper side portion 114 is pulled horizontally, and the gas to flow to the upper side portion 114 from the left side portion 112 and the right side portion 113, causing the upper side portion 114 to be inflated.

In the protection device for a pedestrian or the like shown in Fig. 10 in Japanese Unexamined Patent Application Publication No. 2000-264146, in order to quickly deploy the airbag 110 to a predetermined deployment area, it is necessary for the gas to quickly go around the entire airbag 110. To achieve this, a high output inflator may be used, but, in this case, the internal pressure of the deployed airbag may become excessively high.

An object of the present invention is to provide an airbag for protecting a pedestrian or the like and an airbag device for protecting a pedestrian or the like including the airbag. The airbag is quickly deployed to a predetermined deployment area without the use of a high output inflator and has a high absorption property of impact which is applied to the pedestrian or the like.

According to Claim 1 of the invention, there is provided an airbag for protecting a pedestrian or the like. The airbag comprises a lower side portion provided so as to extend along a cowl top of a vehicle, left and right side portions provided so as to extend along left and right pillars, respectively, and an upper side portion connecting top portions of the left and right side portions. At least a horizontally central portion of the upper side portion is connected to the left and right side portions through small flow path cross-sectional portions.

The airbag for protecting a pedestrian or the like according to Claim 2 of the invention is characterized in that, in Claim 1, a portion between the small flow path cross-sectional portions at the upper side portion is provided with a vent hole.

According to Claim 3 of the invention, there is provided an airbag device for protecting a pedestrian or the like. The airbag device comprises an airbag for protecting a pedestrian or the like, and an inflator. The airbag comprises a lower side portion provided so as to extend along a cowl top of a vehicle, left and right side portions provided so as to extend along left and right pillars, respectively, and an upper side portion connecting top portions of the left and right side portions. The inflator supplies gas to the lower side portion. The airbag for protecting a pedestrian or the like is the airbag for protecting a pedestrian or the like of either Claim 1 or Claim 2.

In the airbag for protecting a pedestrian or the like and the airbag device for protecting a pedestrian or the like according to the present invention, when a collision between the pedestrian or the like and a vehicle is detected or predicted, the inflator operates, thereby starting the inflation of the airbag. In this case, gas from the inflator is supplied to the lower side portion of the airbag, so that, first, the lower side portion is inflated and deployed along the cowl top.

Next, from the lower side portion, the gas flows to the left side portion and the right side portion, so that the left side portion and the right side portion are inflated and deployed so as to expand upward along the left and right pillars, respectively. Since the top portion of the left side portion and the top portion of the right side portion are connected by the upper side portion, fluttering of the left side portion and the right side portion when they are deployed is prevented or restricted.

The deployment of the left side portion and the right side portion causes the upper side portion to be placed near the front edge of a roof as the upper side portion is pulled horizontally.

In the present invention, since the upper side portion is connected to the left and right side portions through the small flow path cross-sectional portions, the introduction of gas to the upper side portion from the left side portion and the right side portion is restricted. Therefore, the internal pressures of the lower side portion, the left side portion, and the right side portion become high early, so that they are quickly deployed along the cowl top and the left and right pillars, respectively.

Thereafter, the gas gradually passes through each small flow path cross-sectional portion and flows to the upper side portion from the left side portion and the right side portion, thereby reducing the internal pressures of the lower side portion, the left side portion, and the right side portion, so that, finally, the internal pressures of the lower side portion, the left side portion, the right side portion, and the upper side portion all become substantially equal. As a result, the internal pressure of the entire airbag becomes relatively low, so that, when a pedestrian or the like collides with the airbag, a sufficient stroke occurs. Therefore, impact that is applied to the pedestrian or the like is absorbed.

When a vehicle collides with a pedestrian or the like at a relatively high speed (such as 30 to 40 km/h), the pedestrian or the like may collide with the lower side portion, the left side portion, and the right side portion when the internal pressures of these portions are high. In this case, when the pedestrian or the like pushes these portions, discharging of gas towards the upper side portion is accelerated. The discharging of the gas towards the upper side portion causes impact that is applied to the pedestrian or the like to be sufficiently absorbed.

As Claim 2 of the invention, a vent hole formed at the portion between the small flow path cross-sectional portions at the upper side portion makes it possible, not only to reduce the speed of deployment of the airbag, but also to further increase an absorption property of impact which is applied to the pedestrian or the like.

Embodiments will hereunder be described with reference to the drawings
Fig. 1 is a perspective view of a vehicle including a protection device for a pedestrian or the like according to an embodiment;
Fig. 2 is a sectional view taken along line II-II shown in Fig. 1;
Fig. 3 is a plan view of an airbag shown in Fig. 1;
Fig. 4 is a plan view of an airbag of another embodiment;
Fig. 5 is a plan view of an airbag, showing an example of a disposition of a vent hole; and
Fig. 6 is a perspective view of a vehicle including a protection device for a pedestrian or the like explaining an example of a conventional airbag.

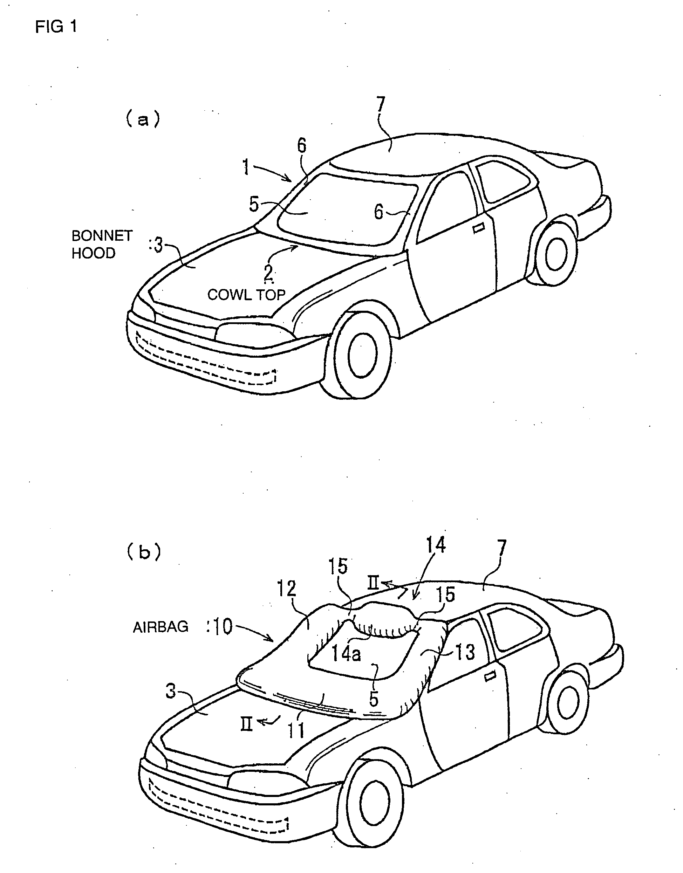

In Fig. 1(a), a vehicle 1 is a four-door sedan, but the present invention is not limited thereto. An airbag device for protecting a pedestrian or the like by inflating and deploying an airbag 10 for protecting a pedestrian or the like along the periphery of a windshield 5 during collision with the pedestrian or the like is disposed at a cowl top 2 or the rear portion of a bonnet hood 3. (The airbag protecting a pedestrian or the like may hereunder be simply referred to as the "airbag.")

The airbag device for protecting a pedestrian or the like comprises the airbag 10, an inflator 21 for supplying gas to the airbag 10, a case 22 accommodating the folded airbag 10 and the inflator 21, and a cover (not shown) which usually covers the case 22 and which opens when the airbag 10 is inflated. The cover may form an outer surface of the vehicle body. The airbag for protecting a pedestrian or the like is disposed at the lower side of the rear portion of the bonnet hood 3, and pushes open the rear portion of the bonnet hood 3 when the airbag 10 is inflated.

As shown in Fig. 1(b), the airbag 10 has the shape of rectangular frame and has a lower side portion 11 extending along the cowl top 2, a left side portion 12 and a right side portion 13 extending along left and right A pillars 6 and 6, respectively, and an upper side portion 14 connecting the top portion of the left side portion 12 and the top portion of the right side portion 13. The inflator 21 is disposed in the lower side portion 11.

In the present invention, small flow path cross-sectional portions 15 having flow path cross-sectional areas that are smaller than those of the left side portion 12, the right side portion 14, and a horizontally central portion 14a of the upper side portion 14 are formed at respective horizontal ends of the upper side portion 14. The terms "flow path cross-sectional area" refer to an opening area in cross-section in a direction perpendicular to a direction of distribution of gas or a direction of extension of each part of the airbag.

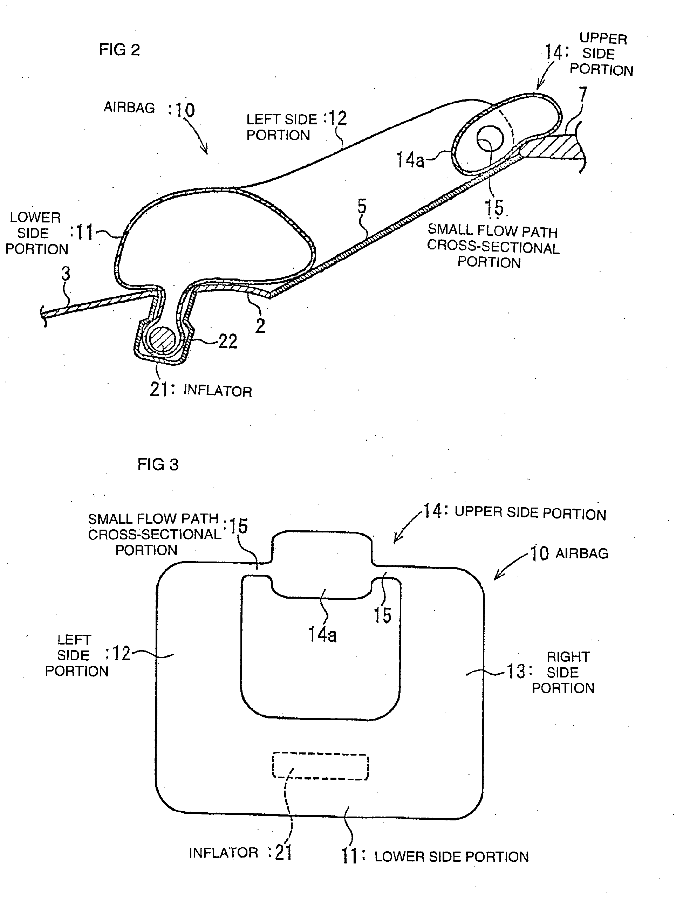

In the embodiment, as shown in Fig. 3, the small flow path cross-sectional portions 15 are formed so as to narrow down both ends of the upper side portion 14 into the form of a small-diameter tube. In the embodiment, each small flow path cross-sectional portion 15 has one end formed consecutively with the top end of its associated left side portion 12 or right side portion 13, and its other end formed consecutively near a vertical intermediate portion of its associated side of the central portion 14a. However, the disposition and the structure of the small flow path cross sectional portions are not limited thereto.

The flow path cross-sectional area of each small flow path cross-sectional portion 15 is desirably 0.5 to 20% and, more desirably, 1 to 10% of the average flow path cross-sectional area of each of the left side portion 12 and the right side portion 13. The volume of the central portion 14a is desirably 5 to 50%, and, more desirably, 10 to 30% of the total of the volumes of the lower side portion 11, the left side portion 12, and the right side portion 13.

Next, the operation of the airbag device including the airbag 10 having such a structure will be described.

When a collision between a pedestrian or the like and the vehicle 1 is detected or predicted, the inflator 21 ejects gas, thereby starting the inflation of the airbag 10. In this case, the gas from the inflator 21 is supplied to the lower side portion 11 of the airbag 10, so that, first, the lower side portion 11 is inflated and deployed along the cowl top 2.

Next, from the lower side portion 11, the gas flows to the left side portion 12 and the right side portion 13, so that the left side portion 12 and the right side portion 13 are inflated and deployed so as to expand upward along the left and right A pillars 6 and 6, respectively. Since the top portion of the left side portion 12 and the top portion of the right side portion 13 are connected by the upper side portion 14, fluttering of the left side portion 12 and the right side portion 13 when they are deployed is prevented or restricted.

The deployment of the left side portion 12 and the right side portion 13 causes the upper side portion 14 to be placed near the front edge of the roof 7 as the upper side portion 14 is pulled horizontally.

In the airbag 10, since the upper side portion 14 (central portion 14a) is connected to the left and right side portions 12 and 13 through the small flow path cross-sectional portions 15, the introduction of gas to the upper side portion 14 from the left side portion 12 and the right side portion 13 is restricted. Therefore, even if the inflator 21 has a relatively low output, the internal pressures of the lower side portion 11, the left side portion 12, and the right side portion 13 become high early, so that they are quickly deployed along the cowl top 2 and the left and right A pillars 6 and 6, respectively.

Thereafter, the gas gradually passes through each small flow path cross-sectional portion 15 and flows to the upper side portion 14 from the left side portion 12 and the right side portion 13, thereby reducing the internal pressures of the lower side portion 11, the left side portion 12, and the right side portion 14, so that, finally, the internal pressures of the lower side portion 11, the left side portion 12, the right side portion 13, and the upper side portion 14 all become substantially equal. As a result, the internal pressure of the entire airbag 10 becomes relatively low, so that, when a pedestrian or the like collides with the airbag 10, a sufficient stroke occurs. Therefore, impact that is applied to the pedestrian or the like is absorbed.

When the vehicle 1 collides with a pedestrian or the like at a relatively high speed (such as 30 to 40 km/h), the pedestrian or the like may collide with the lower side portion 11, the left side portion 12, and the right side portion 13 when the internal pressures of these portions are high. In this case, when the pedestrian or the like pushes these portions, discharging of gas towards the upper side portion 14 is accelerated. The discharging of the gas towards the upper side portion 14 causes impact that is applied to the pedestrian or the like to be sufficiently absorbed.

The embodiment is only one form of the present invention, so that the present invention is not limited to the embodiment.

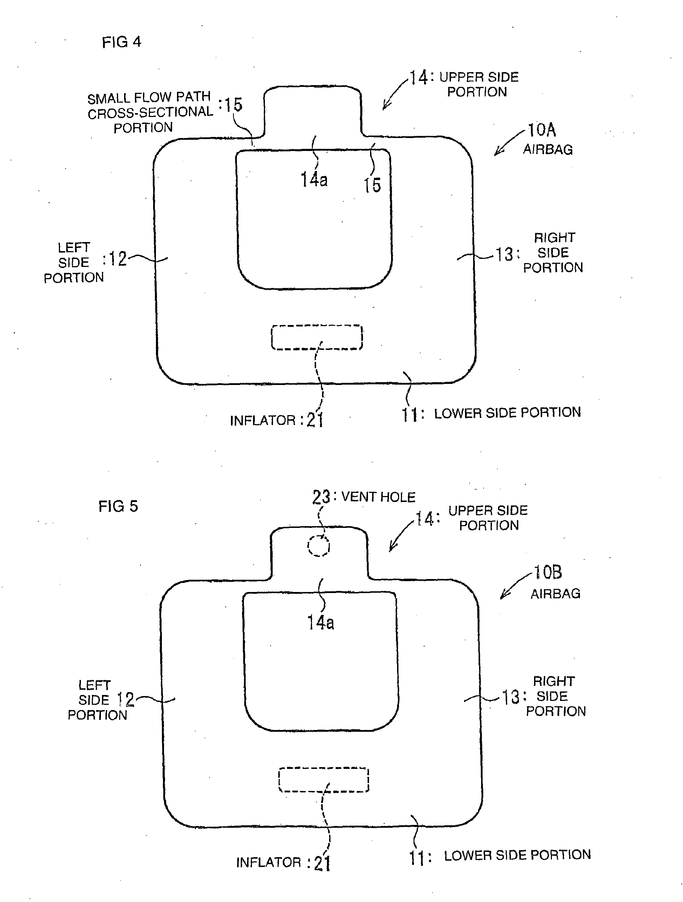

For example, the disposition of the small flow path cross-sectional portions 15 is not limited to that shown in Fig. 3. Fig. 4 is a plan view of an airbag, showing another example of the disposition of small flow path cross-sectional portions 15. In an airbag 10A shown in Fig. 4, each small flow path cross-sectional portion 15 has one end formed consecutively with the top end of its associated left side portion 12 or right side portion 13, and its other end formed consecutively with the lower portion of its associated side of the central portion 14a of the upper side portion 14. Obviously, the disposition of the small flow path cross sectional portions 15 is not limited thereto.

Although, in the embodiment, the small flow path cross-sectional portions 15 are formed so as to narrow down both ends of the upper side portion 14, the structure of the small flow path cross-sectional portions 15 is not limited thereto. For example, although not illustrated, it is possible to form openings having small flow path cross-sectional areas in walls formed between the upper side portion 14 and the left and right side portions 12 and 13.

In the present invention, a vent hole may be formed in the airbag. In this case, as shown in an airbag 10B shown in Fig. 5, it is desirable to dispose a vent hole 23 in a horizontally central portion 14a of an upper side portion 14, that is, a portion between small flow path cross-sectional portions 15 and 15.

By virtue of such a structure, at an early stage of inflation of the airbag 10B, the discharge of gas from the vent hole 23 is small, so that the internal pressures of a lower side portion 11, a left side portion 12, and a right side portion 13 quickly become high. Therefore, the airbag 10B is quickly deployed. In addition, when a pedestrian or the like collides with the inflated airbag 10B, the gas is discharged from the vent hole 23 to the outside of the airbag 10B, so that impact that is applied to the pedestrian or the like is further absorbed.

Fig. 5 shows an example of the disposition of the vent hole, and the position and numbers of vent holes are not limited thereto.

## Claims

1. An airbag for protecting a pedestrian or the like, the airbag comprising:
a lower side portion provided so as to extend along a cowl top of a vehicle;
left and right side portions provided so as to extend along left and right pillars, respectively; and
an upper side portion connecting top portions of the left and right side portions,
wherein at least a horizontally central portion of the upper side portion is connected to the left and right side portions through small flow path cross-sectional portions.

2. The airbag for protecting a pedestrian or the like according to Claim 1, wherein a portion between the small flow path cross-sectional portions at the upper side portion is provided with a vent hole.

3. An airbag device for protecting a pedestrian or the like, the airbag device comprising:
an airbag for protecting a pedestrian or the like, the airbag comprising a lower side portion provided so as to extend along a cowl top of a vehicle, left and right side portions provided so as to extend along left and right pillars, respectively, and an upper side portion connecting top portions of the left and right side portions; and an inflator for supplying gas to the lower side portion,
wherein the airbag for protecting a pedestrian or the like is the airbag for protecting a pedestrian or the like of either Claim 1 or Claim 2.
